# DEMANDE DE BREVET EUROPEEN

(11) **EP 2 086 264 A1**
(43) Date de publication de la demande: **05.08.2009**
(21) Numéro de dépôt: 09151884.5
(22) Date de dépôt: 02.02.2009
(51) Int. Cl.: H04W 48/14

(54) **Procédé pour gérer l'accès d'un équipement utilisateur à une infrastructure de réseau de radiocommunication et module de controle de point d'accès**

(30) Priorité: 01.02.2008 FR 0850647
(71) Demandeur: Alcatel Lucent, 75008 Paris (FR)
(72) Inventeur: Thomas, Laurent ALCATEL LUCENT, 91620, NOZAY (FR); Lucidarme, Thierry, 78180, MONTIGNY LE BRETONNEUX (FR); Godin, Philippe, 78141, VELIZY (FR)
(74) Mandataire: Ameline, Jean-Paul B.C.

(57) **Abrégé**

Dans une infrastructure d'un réseau de radiocommunication comprenant au moins un point d'accès, un premier point d'accès envoie à un second point d'accès avec lequel il est apte à communiquer, ledit second point d'accès étant dans un mode sommeil dans lequel il n'émet aucun signal de synchronisation, un message de requête de sortie du mode sommeil.

## Description

La présente invention se rapporte à un procédé pour gérer l'accès d'un équipement utilisateur à une infrastructure de réseau de radiocommunication, ainsi qu'à un point d'accès de l'infrastructure, et à un équipement utilisateur, pour la mise en oeuvre du procédé.

L'invention concerne tout type de réseau de radiocommunication avec les mobiles, et en particulier les réseaux cellulaire de deuxième génération (GSM, GPRS, IS-95), de troisième génération (UMTS, CDMA2000) ou leurs évolutions (LTE). Elle concerne aussi les réseaux locaux sans fil, de type standards WLAN («Wireless Local Area Network» - IEEE 802.11 a, Wi-Fi (802.11g), ETSI HiperLAN/2), et WiMAX (IEEE 802.16, ETSI HiperMAM).

Dans de nombreux systèmes de radiocommunication avec les mobiles, l'accès d'un équipement utilisateur à une infrastructure de réseau de radiocommunication s'effectue selon une procédure d'accès aléatoire définie dans laquelle un équipement utilisateur cherchant par exemple à initier une communication envoie à un point d'accès une requête d'accès aléatoire. L'infrastructure de réseau de radiocommunication comprend typiquement un ensemble de stations de base, de routeurs de station de base, de points d'accès, ou tout autre équipement agencé pour communiquer avec des équipements utilisateur sur l'interface air. Les téléphones cellulaires, les assistants personnels (PDA), les équipements GPS, les pagers, les téléphones mobiles, les ordinateurs portables équipés de moyens de connexion WiFi ou WiMAX sont des exemples d'équipements utilisateur. L'établissement d'une connexion entre l'équipement utilisateur et l'infrastructure de réseau de radiocommunication s'effectue dès lors que la requête d'accès est servie par le réseau. La procédure d'accès fait en général intervenir des informations relatives au système, qui sont diffusées vers les équipements sous la couverture radio des points d'accès de l'infrastructure. L'accès à ces informations système requiert en général que l'équipement utilisateur se soit au préalable synchronisé sur un signal de balise diffusé par chaque point d'accès de l'infrastructure.

C'est le cas notamment de I'UMTS, qui est un système de radiocommunication de troisième génération dont le réseau d'accès, appelé UTRAN (« UMTS Terrestrial Radio Access Network »), utilise un accès multiple à répartition par codes (CDMA, « Code-Division Multiple Access »), c'est-à-dire que les symboles transmis sont multipliés par des codes d'étalement constitués d'échantillons appelés «chips » dont la cadence (3,84 Mchip/s dans le cas de I'UMTS) est supérieure à celle des symboles transmis.

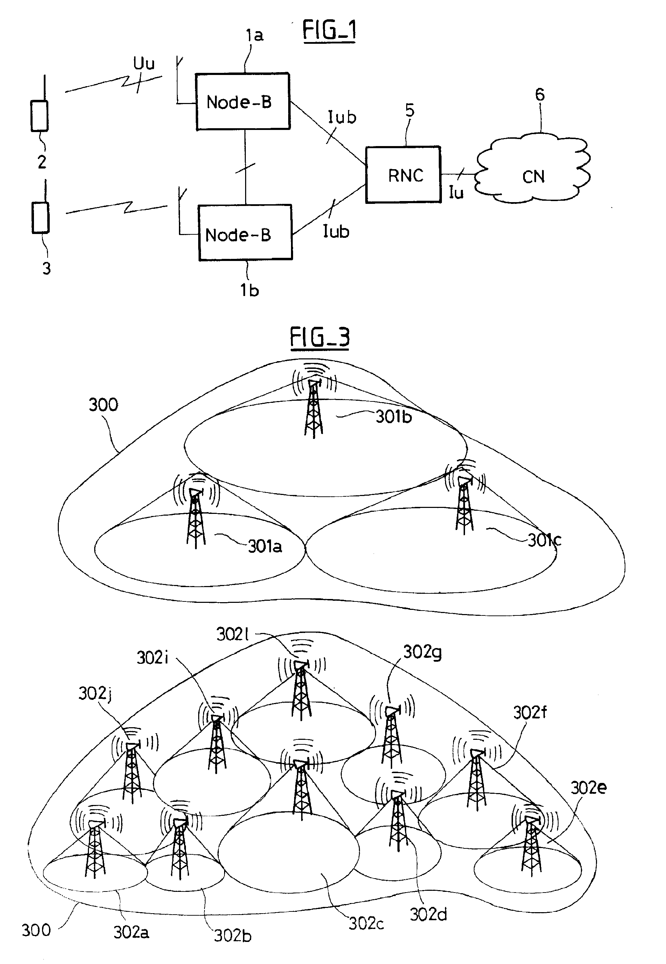

La figure 1 illustre un exemple d'architecture de réseau UMTS. Le réseau d'accès UTRAN comporte des contrôleurs de réseau radio 5 appelés RNC (« Radio Network Controller ») qui, par l'intermédiaire d'une interface lub, pilotent des noeuds de réseau 1a, 1b appelés « Node B », Chaque Node B comporte une ou plusieurs stations de base desservant chacune une ou plusieurs cellules. Ces stations de base communiquent par radio avec des terminaux mobiles 2,3 appelés UE (« User Equipment ») par l'intermédiaire d'une interface Uu (voir spécification technique 3GTS25.401, version 3.3.0, publiée par l'organisation 3GPP). L'UTRAN est relié à un coeur de réseau 6 (CN, "Core Network"), au moyen d'une interface dite lu.

Les codes d'étalement distinguent différents canaux physiques PhCH (« Physical CHannel ») qui sont superposés sur la même ressource de transmission constituée par une fréquence porteuse. Les propriétés d'auto- et d'inter-corrélation des codes d'étalement permettent au récepteur de séparer les PhCH et d'extraire les symboles qui lui sont destinés. Pour I'UMTS en mode FDD sur la liaison descendante, un code de « scrambling » est alloué à chaque station de base, et différents canaux physiques utilisés par cette station de base sont distingués par des codes de « channelisation » mutuellement orthogonaux. Pour chaque PhCH, le code d'étalement global est le produit du code de « channelisation » et du code de « scrambling » de la station de base Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Chaque cellule de station de base diffuse sur la couverture radio un signal de balise sur un canal pilote primaire appelé CPICH. Le signal de balise comprend une séquence de bits prédéfinie, et est décrit à la section 5.3.3 de la spécification technique TS 25.211 (« Universal Mobile Telecommunications System (UMTS); Physical channels and mapping of transport channels onto physical channels (FDD) »). version 3.9.0, publiée par le 3GPP en décembre 2001.

Chaque UE 2,3 peut être dans plusieurs états de liaison avec I'UTHAN, gérés par un protocole de gestion des ressources radio (RRC, « Radio Resource Control ») mis en oeuvre au niveau du RNC et au niveau de I'UE (voir spécification technique 3G TS 25.331, version 3.3.0, publiée en juin 2000 par le 3GPP, section 9), parmi lesquels un état de veille ou d'autres états dans lesquels I'UE est en connexion active avec le réseau.

Lorsque I'UE est sous tension et dans une cellule sélectionnée sans avoir de communication en cours avec I'UTRAN, il est dans un état de veille (« idle »). Les processus de sélection initiale et de resélection de cellule sont décrits dans la spécification technique 3G TS 25.304, version 3.6.0 publiée en mars 2001 par le 3GPP, section 5.2, Dans cet état de veille, après avoir sélectionné une cellule, I'UE reçoit des informations système émises sur un canal de diffusion (BCH) par la station de base de la cellule sélectionnée (voir spécification technique 3G TS 25.331, version 3.9.0 publiée en décembre 2001 par le 3GPP, section 8.1.1). Ces informations système incluent entre autres des informations de contrôle de l'accès montant, ainsi que des informations relatives à la procédure d'accès aléatoire sur la couche physique.

Pour initialiser une communication, ou plus généralement pour transmettre des informations à I'UTRAN lorsque I'UE est en mode veille, I'UE émet à destination de la station de base sélectionnée un signal de requête d'accès aléatoire sur un canal commun appelé PRACH (« Physical Random Access Channel »). Cette procédure d'accès aléatoire est exécutée par la couche physique (voir spécifications techniques 3G TS 25.211 et TS 25.214, version 3.9.0, section 6), sous le contrôle de la couche de contrôle d'accès au médium (MAC, voir spécification technique 3G TS 25.321, version 3.9.0, publiée en septembre 2001 par le 3GPP, section 11.2) et de la couche RRC.

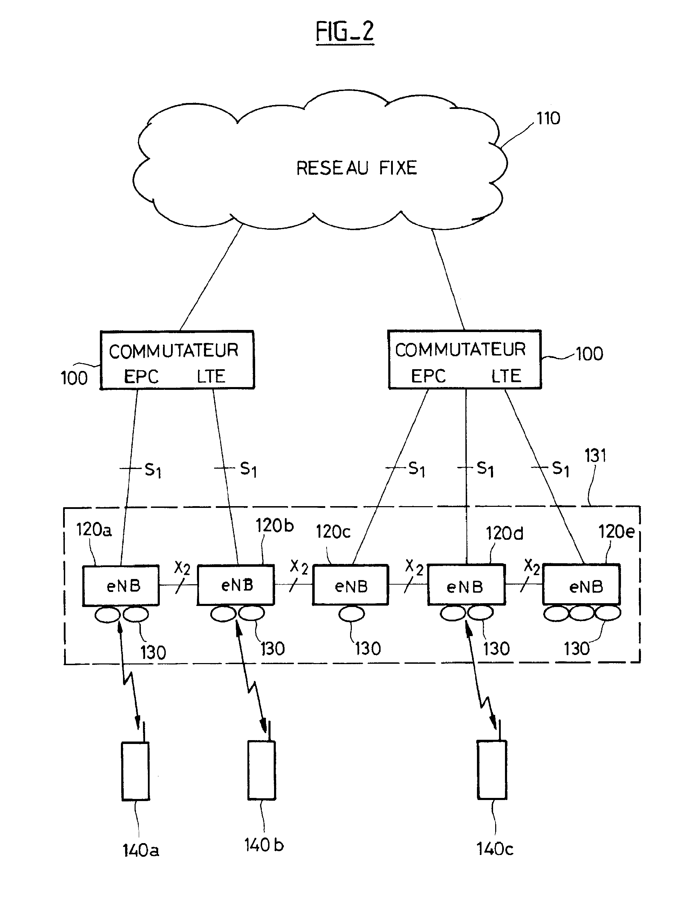

Une procédure d'accès aléatoire est aussi prévue dans les systèmes de quatrième génération de type LTE (« Long Term Evolution »). La figure 2 illustre un exemple d'architecture d'un réseau LTE. Les commutateurs du service mobile 100, appartenant un coeur de réseau (EPC, "Evolved Packet Core"), sont reliés d'une part à un ou plusieurs réseaux fixes 110 et d'autre part, au moyen d'une interface dite S1, à des stations de base 120a-120e, ou eNB ou eNodeB. Les stations de base 120a-120e, réparties sur le territoire de couverture du réseau, communient entre elles au moyen d'une interface dite X2 et sont capables de communiquer par radio avec les terminaux mobiles 140, 140a, 140b, aussi appelés UE ("User Equipment"). On peut considérer schématiquement que les fonctions d'un Node-B et d'un RNC dans l'architecture d'un réseau d'accès UMTS (UTRAN) ont été intégrées au sein de la station de base LTE 120a-120e. Les stations de base 120a-120e, peuvent par ailleurs desservir chacune une ou plusieurs cellules au moyen d'émetteurs-récepteurs respectifs 130. Elles forment un réseau d'accès appelé E-UTRAN 131 (« Evolved UTRAN »). Différents canaux physiques sont aussi définis pour le système LTE, ainsi que des signaux physique de référence et de synchronisation, Les canaux physiques définis incluent un canal de diffusion d'informations système, le PBCH. Une description détaillée du système LTE à laquelle on pourra se référer se trouve dans l'ouvrage « Evolved Packet System, The LTE and SAE Evolution of 3G UMTS », de P. Lescuyer et T. Lucidarme, publié en 2008.

Lorsqu'un UE 140,140a, 140b ne se trouve plus sous la couverture radio de I'E-UTRAN 131, par exemple du fait d'une absence de couverture, il ne reçoit plus de signal de synchronisation ou d'informations système, pourtant indispensables pour se synchroniser avec le réseau d'accès, et ne peut donc plus effectuer la procédure d'accès au réseau. De plus, un UE peut se trouver dans une situation où il parvient à se synchroniser avec le réseau d'accès, à traiter les informations systèmes reçues sur le canal de diffusion BCCH, et initier une requête d'accès, et que la procédure d'accès aléatoire échoue. Il se voit aussi alors empêché d'initier une communication sans avoir d'information ni d'influence sur l'état du réseau d'accès, en particulier sur la possibilité pour celui-ci d'augmenter sa capacité.

L'invention a pour but d'améliorer cette situation.

L'invention propose ainsi un procédé de gestion d'accès d'un équipement utilisateur à une infrastructure d'un réseau de radiocommunication comprenant au moins un point d'accès, dans lequel, sur réception d'un signal d'information d'impossibilité d'accès à l'infrastructure, un premier point d'accès envoie à un second point d'accès avec lequel il est apte à communiquer, ledit second point d'accès étant dans un mode sommeil dans lequel il n'émet aucun signal de synchronisation, un message de requête de sortie du mode sommeil.

Le signal d'information d'impossibilité d'accès à l'infrastructure peut avoir été émis par l'équipement utilisateur suite à un test négatif de présence de couverture radio de l'infrastructure de réseau de radiocommunication.

Dans un mode particulier de réalisation de l'invention, le second point d'accès, sur réception du message de requête de sortie du mode sommeil, quitte le mode sommeil pour retourner en mode de fonctionnement normal,

Dans un autre mode particulier de réalisation de l'invention, le second point d'accès, sur réception du message de requête de sortie du mode sommeil, modifie l'étendue de sa couverture radio.

L'invention propose aussi un module de contrôle de point d'accès d'une infrastructure de radiocommunication, agencé pour recevoir une requête de sortie d'un mode sommeil dans lequel il n'émet aucun signal de synchronisation, provenant d'un autre point d'accès de l'infrastructure, ou d'un contrôleur de point d'accès de l'infrastructure ou d'un noeud de sous-système d'opération et de maintenance.

Ce module de contrôle de point d'accès d'une infrastructure de radiocommunication peut avantageusement être mis en oeuvre au sein d'un circuit logique programmable, par exemple de type FPGA, ASIC ou CPLD, ou bien au sein d'un équipement utilisateur,

Ce module de contrôle peut par ailleurs être avantageusement intégré au sein d'une station de base.

L'invention propose enfin un programme d'ordinateur chargeable dans une mémoire associée à un processeur, et comprenant des instructions pour la mise en oeuvre d'un procédé tel que défini ci-dessus lors de l'exécution dudit programme par le processeur, ainsi qu'un support informatique sur lequel est enregistré ledit programme.

D'autres particularités et avantages de la présente invention apparaitront dans la description ci-après d'un exemple de mise en oeuvre non limitatif du procédé selon l'invention, en référence aux dessins annexés, dans lesquels:
- la figure 1 est un schéma illustrant l'architecture d'un réseau UMTS ;
- la figure 2 est un schéma illustrant l'architecture d'un réseau LTE ;
- la figure 3 est un schéma illustrant deux configurations de couverture radio ;
- la figure 4 est un organigramme schématisant les étapes mises en oeuvre dans un mode de réalisation de l'invention ;
- la figure 5 est un schéma synoptique partiel d'un équipement utilisateur auquel l'invention peut s'appliquer ;
- la figure 6 est un schéma synoptique partiel d'une station de base à laquelle l'invention peut s'appliquer.

Dans la présente description, l'invention sera décrite plus particulièrement dans son application, non limitative, aux réseaux de radiocommunication de quatrième génération de type LTE.

Plusieurs cas de figure sont envisageables pour aboutir à une situation dans laquelle I'UE ne parvient plus à recevoir des informations système émises sur un canal de diffusion (BCCH) par une station de base sous la couverture radio de laquelle il se trouverait. Cette situation peut survenir lorsque par exemple I'UE se déplace pour sortir progressivement de la couverture radio de la station de base de la cellule sélectionnée, sans pour autant rentrer dans la couverture radio d'une autre station de base.

D'autre part, certaines stations de base de l'infrastructure de réseau de radiocommunication peuvent être passées dans des modes de fonctionnement différents du mode de fonctionnement nominal. Elles peuvent par exemple être éteintes dans le but d'en effectuer la maintenance, ou bien passer dans un mode de sommeil dans lequel elles ne fournissent plus de couverture radio.

Le fonctionnement en mode sommeil, dans lequel la station de base cesse d'émettre, notamment son canal de diffusion portant des informations système, peut être activé pour des périodes prédéterminées, par exemple pendant la nuit, ou tout autre moment où il est constaté que les besoins en couverture radio ou en trafic sont moindres qu'aux périodes d'utilisation normale.

Dans une infrastructure de radiocommunication, la couverture radio est fournie par un ensemble d'équipements de couverture radio, tels que des points d'émission/réception radio, des stations de base, des têtes RF de station de base, ou des répéteurs. En général, les besoins en termes de couverture et de capacité conduisent à fortement augmenter le nombre de ces équipements sur des environnements urbains. Le cumul de consommation en puissance de l'ensemble de ces équipements de couverture radio s'avère élevé, alors même que le trafic total sur une couverture radio donnée n'est souvent pas au niveau de la capacité maximum que le réseau est prévu pour fournir.

De plus, la couverture radio des équipements de couverture radio peut varier dynamiquement, notamment en fonction de l'environnement radio des équipements. Des techniques comme le « cell breathing », le contrôle automatique de la puissance du signal de balise, la commande adaptative de tilt d'un système d'antenne, permettent une modification rapide de la couverture radio d'un équipement de couverture radio. Dès lors, on peut prévoir des couvertures radio réalisées avec deux niveaux d'équipements de couverture radio, l'un étant prévu avec une capacité correspondant à un trafic faible (par exemple la nuit), l'autre étant prévu avec une capacité correspondant à un trafic élevé (par exemple le jour).

Ce type de couverture radio est lustré à la figure 3. Dans une première configuration, la zone 300 sur laquelle une couverture radio doit être réalisée est couverte par des cellules générées par un nombre limité d'équipements de couverture radio 301a, 301b et 301c. Cette première configuration correspond à une couverture de la zone 300 avec une faible capacité, prévue pour être mise en oeuvre à des moments où le trafic dans la zone 300 est faible. Dans une seconde configuration, la zone 300 est couverte par des cellules de plus petite taille, générées par un plus grand nombre d'équipements de couverture radio 302a - 302j. Cette seconde configuration correspond à une couverture de la zone 300 avec une forte capacité, prévue pour être mise en oeuvre à des moments où le trafic dans la zone 300 est important.

Le passage de la seconde configuration vers la première configuration peut s'effectuer, non pas en éteignant purement et simplement les équipements de couverture radio 302a - 302j de la seconde configuration, mais en les plaçant en mode sommeil, tandis que les équipements de couverture radio 301a - 301c de la première configuration sont placés en mode de fonctionnement normal (et non pas en mode sommeil). A l'inverse, le passage de la première configuration vers la seconde configuration peut s'effectuer en plaçant les équipements de couverture radio 301a - 301c de la première configuration en mode sommeil, tandis que les équipements de couverture radio 302a - 302j sont sortis du mode sommeil pour repasser dans un mode de fonctionnement nominal.

Lorsqu'un équipement de couverture radio, par exemple une station de base, est en mode sommeil, il cesse de fournir une couverture radio sans pour autant être complètement éteint. Pour cela, il peut cesser d'émettre son canal de diffusion portant des informations système. Bien sûr, l'équipement de couverture radio en mode sommeil cesse aussi d'émettre et de recevoir tout signal dont la prise en compte requiert au préalable la réception des informations système diffusées en mode de fonctionnement normal (comme par exemple l'émission d'un message de paging vers un équipement utilisateur). Il peut aussi cesser d'émettre en diffusion son signal de balise. Par ailleurs, il active ses moyens de surveillance de réception de requête de sortie du mode sommeil. Une telle requête de sortie du mode sommeil peut provenir d'une seule source ou bien de plusieurs sources parmi les différentes sources suivantes : il peut s'agir pour une station de base d'un contrôleur de station de base, comme par exemple sur la figure 1 le RNC 5 pour le Node-B 1a, 1b, ou bien, autre exemple, d'une autre station de base, par exemple voisine de la station de base en mode sommeil, comme par exemple sur la figure 2 le eNB 120c pour le eNB 120d, ou bien encore, autre exemple, d'un équipement utilisateur, comme par exemple sur la figure 2 l'UE 140c pour le eNB 120d.

Ainsi, lorsqu'elle entre dans le mode sommeil précédemment décrit, la station de base active, selon les procédures de sortie de mode sommeil prévues, ses moyens de surveillance de réception d'une requête de sortie du mode sommeil en provenance du contrôleur qui la supervise, ses moyens de surveillance de réception d'une requête de sortie du mode sommeil en provenance d'une station de base voisine, ses moyens de surveillance de réception d'une requête de sortie du mode sommeil en provenance d'un équipement utilisateur, ou bien active une pluralité ou la totalité des trois moyens précités.

L'entrée et la sortie du mode sommeil peuvent aussi bien entendu être pilotées à partir d'une infrastructure d'opération et de maintenance (O&M), de manière à ce que l'activation d'un mode de fonctionnement donné pour un point d'accès du réseau soit sous le contrôle d'un opérateur du réseau.

La figure 2 permet d'illustrer un premier aspect de l'invention dans lequel un UE cherche à accéder au réseau alors que le point d'accès par lequel il accèderait au réseau par la procédure d'accès aléatoire est en mode sommeil. Sur la figure 2, il peut par exemple s'agir de I'eNB 120d. Lorsque I'eNB 120d passe en mode sommeil, il cesse d'émettre son signal de synchronisation. L'UE 140c qui, lorsque l'eNB 120d n'est pas en mode sommeil, serait sous la couverture radio de celui-ci, n'est pas non plus sous la couverture radio des eN8 voisins 120c, 120e de l'eNB 102d, de sorte qu'il ne reçoit aucun signal lui permettant de se synchroniser sur le réseau E-UTRAN 131 auquel I'eNB 120d appartient. Il n'a donc plus de possibilité d'accès à l'infrastructure E-UTRAN à partir d'informations portées par un canal PBCH diffusé par un point d'accès 120a - 120e de ce réseau E-UTRAN 131.

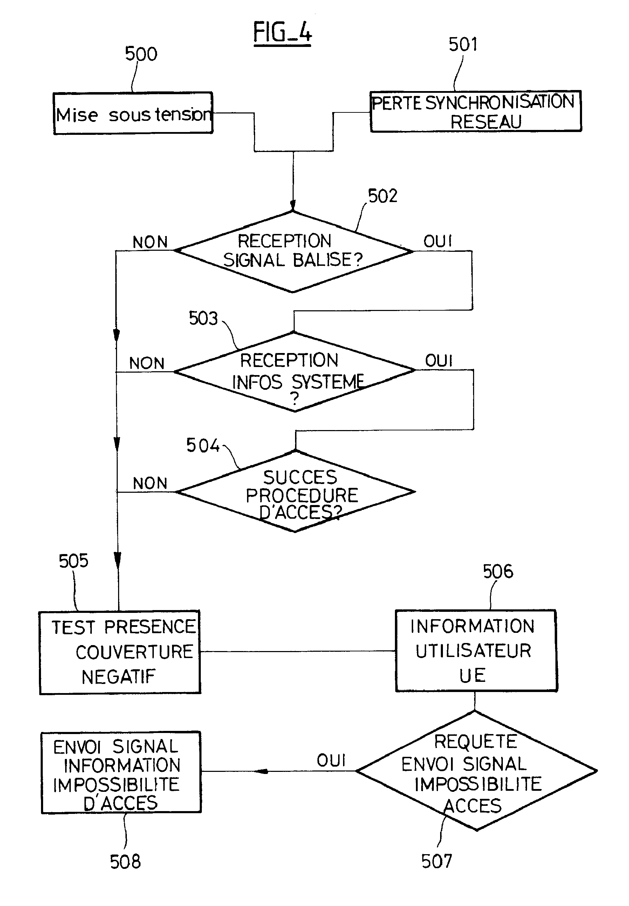

La figure 4 illustre un exemple de procédure de test de présence de couverture radio. L'UE 140e effectue un test de présence de couverture radio dans différentes circonstances, par exemple lorsqu'il perd la synchronisation avec le réseau E-UTRAN 131 (étape 500), ou bien après avoir été mis sous tension (501). Ce test de présence de couverture radio E-UTRAN comprend un premier test de réception d'un signal de balise (étape 502) de type conforme aux spécifications LTE.

Lorsque ce test de réception d'un signal de balise de type conforme aux spécifications LTE est négatif, le test de présence de couverture radio est déclaré négatif (étape 505).

Différents types de test peuvent être envisagés, en complément ou comme alternative au test de réception d'un signal de balise, à titre de test de présence de couverture radio, sans pour autant sortir du cadre de la présente invention. La figure 4 illustre un exemple particulier de réalisation dans lequel le test de présence de couverture radio comprend un ensemble de tests qui doivent être successivement déclarés positifs pour que le test de couverture radio le soit. Ainsi, lorsque le test de réception d'un signal de balise (étape 502) de type conforme aux spécifications LTE est positif, le test de présence de couverture radio se poursuit avec un test de réception des informations système diffusées par I'E-UTRAN 131 (étape 503). Lorsque ce test de réception des informations système (étape 503) diffusées par I'E-UTRAN 131 est négatif, le test de présence de couverture radio est déclaré négatif (étape 505). Lorsque le test de réception des informations système (étape 503) diffusées par I'E-UTRAN 131 est positif, le test de présence de couverture radio se poursuit avec un test de succès de procédure d'accès aléatoire (étape 504). Lorsque ce test de succès de procédure d'accès aléatoire (étape 504) est négatif, le test de présence de couverture radio est déclaré négatif (étape 505).

Ainsi, on peut prévoir une procédure de test de présence de couverture radio ne comprenant qu'un test de réception du signal balise. On peut aussi prévoir, dans un autre mode de réalisation, une procédure de test de présence de couverture radio ne comprenant qu'un test de réception des informations systèmes. On peut encore prévoir, toujours dans un autre mode de réalisation, une procédure de test de présence de couverture radio ne comprenant que les tests de réception de signal de balise et de réception des informations système, les deux tests étant effectués successivement comme décrit précédemment.

Dans un mode particulier de réalisation de l'invention, il suffit de déclarer négatif le test de présence de couverture radio pour déclencher l'émission d'un signal d'information d'impossibilité d'accès a l'infrastructure. Dans un autre mode de réalisation de l'invention, illustré sur la figure 4, le résultat de test d'accès à l'infrastructure d'accès ne déclenche pas systématiquement l'émission d'un signal d'information d'impossibilité d'accès à l'infrastructure. Il est au préalable porté à la connaissance de l'utilisateur de l'équipement utilisateur (étape 506), par tous moyens connus en soi (signal sur interface graphique utilisateur (en anglais Graphic User Interface, ou GUI), signal sonore, signal visuel, etc.). L'utilisateur peut ensuite requérir l'émission d'un signal d'information d'impossibilité d'accès à l'infrastructure (étape 507), soit expressément, soit implicitement par le biais d'une autre commande, comme par exemple une commande d'appel d'urgence. Il est par ailleurs possible d'envisager, sans pour autant sortir du cadre de la présente invention, des équipements utilisateurs configurables, pouvant être configurés pour fonctionner selon le premierou le second des deux modes précités.

Ce signal d'information d'impossibilité d'accès à l'infrastructure est potentiellement reçu par tout eNB qu'il peut atteindre de par sa portée, et a pour fonction d'alerter les eNBs qui le reçoivent, afin de provoquer la sortie du mode sommeil de certains au moins de ces eNBs, suivant les procédures de sortie de mode sommeil prévues. Dans l'exemple illustré sur la figure 2, le signal d'information d'impossibilité d'accès à l'infrastructure émis par l'UE 140c est reçu par l'eNB 120d qui le décode et l'interprète comme une requête de sortie du mode sommeil. Il déclenche donc la sortie du mode sommeil à l'eNB 120d, c'est-à-dire la reprise d'émission et de réception de tous les signaux qu'il avait cessé d'émettre ou de recevoir lorsqu'il était en mode sommeil, pour repasser en mode de fonctionnement normal. En particulier, selon l'exemple décrit ci-dessus, l'eNB 120d reprendra la diffusion du signal de balise, et des informations système, à partir desquels l'UE 140c pourra engager une procédure d'accès aléatoire vers l'e-UTRAN 131 par l'intermédiaire du point d'accès e-NB 120d.

Le format du signal d'information d'impossibilité d'accès à l'infrastructure doit permettre à la station de base qui le reçoit en mode sommeil de le détecter et le démoduler. On peut pour ce faire utiliser dans la station de base un récepteur radio à verrouillage de phase. Par ailleurs, différents formats physiques conviennent pour le signal d'information d'impossibilité d'accès à l'infrastructure, qui présentent l'avantage de ne pas nécessiter de synchronisation préalable entre la station de base et l'équipement utilisateur. Par exemple, le signal peut être modulé selon une modulation tout ou rien (en anglais On Off Keying, OOK), telle qu'une modulation d'amplitude de type OOK ou une modulation de phase à deux états. Ce format de signal est alors particulièrement simple, l'information d'impossibilité d'accès à l'infrastructure conduisant dans certains cas à sortir un point d'accès du mode sommeil pour repasser en mode de fonctionnement normal étant portée par le type de modulation choisie.

Avantageusement, et afin d'augmenter la capacité de réception par une station de base du signal d'information d'impossibilité d'accès à l'infrastructure, on peut choisir d'utiliser une modulation plus robuste que le signal de synchronisation normal émis par les stations de base. Ceci peut être réalisé par deux méthodes complémentaires : d'une part par un choix approprié de modulation (par exemple modulation à deux états avec un temps bit long en modulation OOK), et d'autre part par l'utilisation d'un codage cana! redondant (codes auto-correcteurs).

La couverture spatiale de réception du signal par les stations de base est alors plus grande que la couverture offerte par la communication normale entre les équipements utilisateur et les stations de base.

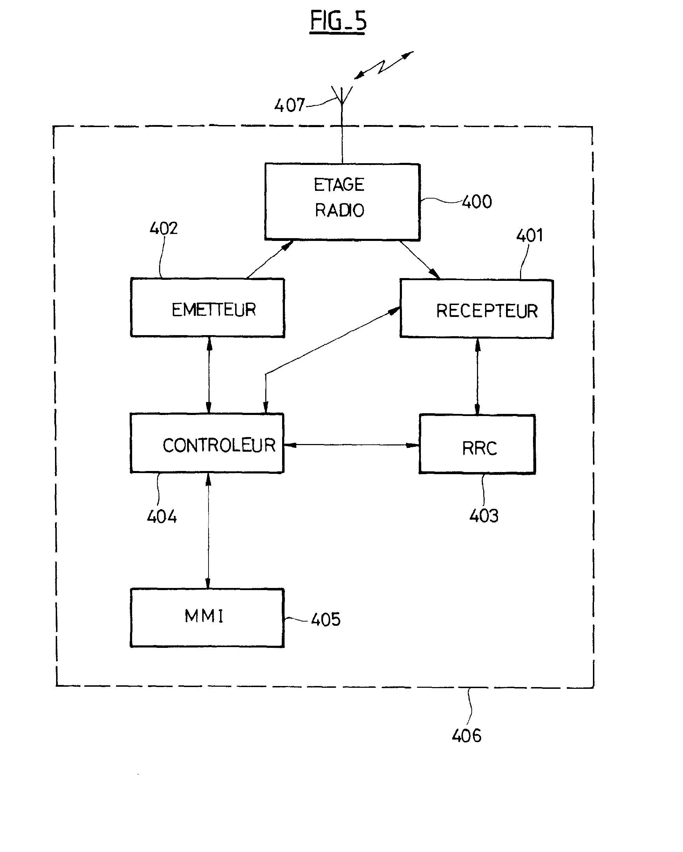

La figure 5 présente un exemple d'architecture fonctionnelle d'équipement utilisateur 406 auquel l'invention peut s'appliquer. Les téléphones cellulaires, les assistants personnels (PDA), les équipements GPS, les pagers, les téléphones mobiles, les ordinateurs portables équipés de moyens de connexion WiFi ou WiMAX sont des exemples d'équipements utilisateur. Le module RRC 403 traite les informations systèmes décodées sur le BCCH par la partie réception 401 de l'UE à partir du signal radio capté par l'antenne 407 et traité par l'étage radio 400. Le module récepteur 401 comprend par ailleurs des moyens pour effectuer, sur requête du contrôleur 404, un test de réception de signal de synchronisation, et le module RRC 403 des moyens pour effectuer, toujours sur requête du contrôleur 404, un test de réception des informations système. Les résultats de ces tests sont transmis au contrôleur 404, qui supervise l'exécution de l'algorithme de test de présence de couverture radio et, le cas échéant, l'émission d'un signal d'information d'impossibilité d'accès à l'infrastructure. Le module émetteur 402 génère le signal d'information d'impossibilité d'accès à l'infrastructure, qui est traité par l'étage radio avant d'être émis par l'antenne 407. Le contrôleur 404 est de plus agencé pour superviser l'exécution de la procédure d'accès aléatoire par l'UE 406. Il peut en outre être agencé pour, conformément à un mode particulier de réalisation de l'invention, intégrer un résultat négatif de procédure d'accès aléatoire dans un algorithme de test de présence de couverture radio, pour également déduire d'un échec de procédure aléatoire un résultat de test de présence de couverture radio négatif.

Le contrôleur 404 supervise par ailleurs, lorsque rémission du signal d'information d'impossibilité d'accès a l'infrastructure n'est pas systématique, l'information de l'utilisateur selon les moyens prévus lorsque le test de présence de couverture radio s'avère négatif. Il transmet pour ce faire le résultat du test de présence de couverture radio au module interface homme-machine 405. Le module interface homme-machine génère un signal (par exemple visuel, ou auditif), et se place en attente d'une requête utilisateur d'envoi du signal d'information. Lorsque cette requête est détectée par le module interface homme-machine 405, elle est transmise au contrôleur 404 qui transmet l'instruction correspondante au module émetteur 402. Le module émetteur 402 génère le signal d'information d'impossibilité d'accès à l'infrastructure, qui est traité par l'étage radio avant d'être émis par l'antenne 407.

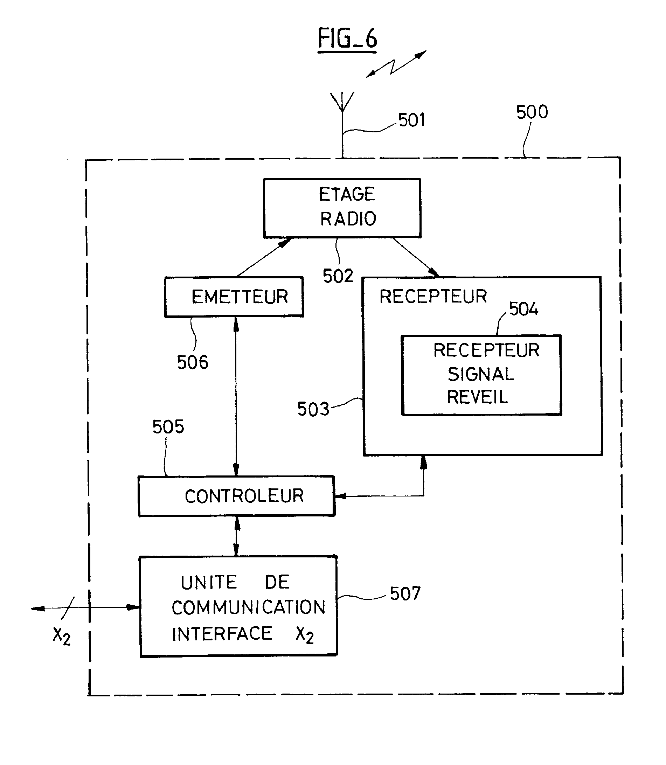

La figure 6 présente un exemple d'architecture fonctionnelle de station de base 500 à laquelle l'invention peut s'appliquer. Le module récepteur 503 inclut un récepteur de signal de réveil 504 qui est apte à détecter la réception d'un signal d'information d'impossibilité d'accès à l'infrastructure à partir d'un signal radio correspondant capté sur l'antenne 501 et traité par l'étage radio 502. Ce récepteur de signal de réveil est actif lorsque la station de base 500 est en mode sommeil, c'est-à-dire qu'il effectue, fréquemment si ce n'est en continu, un cycle de détection de signal d'information d'impossibilité d'accès à infrastructure. Lorsque la réception d'un signal d'information d'impossibilité d'accès à infrastructure est détectée, le module récepteur transmet l'information de détection au contrôleur 505. Le module récepteur est par ailleurs agencé pour décoder le signal d'information d'impossibilité d'accès à l'infrastructure reçu si celui-ci a été encodé selon un code correcteur d'erreurs, Il comprend alors un module de décodage correspondant au schéma d'encodage correcteur d'erreurs utilisé pour l'encodage du signal d'information d'impossibilité d'accès à l'infrastructure. Le contrôleur 505 est agencé pour, si la station de base 500 est en mode sommeil, mettre alors fin au mode sommeil pour retourner en mode de fonctionnement nominal. L'unité de communication interface X2 507 est agencée pour recevoir et traiter des messages de requête de sortie du mode sommeil ainsi que des messages de requête d'entrée en mode sommeil provenant d'une station de base voisine de la station de base 500. Ces requêtes sont transmises au contrôleur 505 qui est agencé pour mettre la station de base en mode sommeil ou bien en mode de fonctionnement nominal.

L'invention ne se limite pas aux modes de réalisation de station de base, équipement utilisateur et procédé de gestion d'accès décrits ci-avant, seulement à titre d'exemple, mais elle englobe toutes les variantes que pourra envisager l'homme de l'art dans le cadre des revendications ci-après.

## Revendications

1. Procédé de gestion d'accès d'un équipement utilisateur à une infrastructure d'un réseau de radiocommunication comprenant au moins un point d'accès, dans lequel, sur réception d'un signal d'information d'impossibilité d'accès à l'infrastructure, un premier point d'accès envoie à un second point d'accès avec lequel il est apte à communiquer, ledit second point d'accès étant dans un mode sommeil dans lequel il n'émet aucun signal de synchronisation, un message de requête de sortie du mode sommeil.

2. Procédé selon la revendication 1, dans lequel le signal d'information d'impossibilité d'accès à l'infrastructure est émis par l'équipement utilisateur suite à un test négatif de présence de couverture radio de l'infrastructure de réseau de radiocommunication.

3. Procédé selon l'une quelconque des revendications précédentes, dans lequel, sur réception du message de requête de sortie du mode sommeil, le second point d'accès quitte le mode sommeil pour retourner en mode de fonctionnement normal.

4. Procédé selon l'une quelconque des revendications 1 à 2, dans lequel, sur réception du message de requête de sortie du mode sommeil, le second point d'accès modifie l'étendue de sa couverture radio.

5. Module de contrôle de point d'accès d'une infrastructure de radiocommunication, agencé pour recevoir une requête de sortie d'un mode sommeil dans lequel il n'émet aucun signal de synchronisation, provenant d'un autre point d'accès de l'infrastructure, ou d'un contrôleur de point d'accès de l'infrastructure ou d'un noeud de sous-système d'opération et de maintenance.

6. Station de base d'une infrastructure de radiocommunication, comprenant un module de contrôle selon la revendication 5.

7. Programme d'ordinateur, chargeable dans une mémoire associée à un processeur, et comprenant des instructions pour la mise en oeuvre d'un procédé selon l'une quelconque des revendications 1à 4 lors de l'exécution dudit programme par le processeur.

8. Support informatique sur lequel est enregistré un programme selon la revendication 7.
